# EUROPÄISCHE PATENTSCHRIFT

(11) **EP 2 733 481 B1**
(45) Veröffentlichungstag und Bekanntmachung des Hinweises auf die Patenterteilung: **08.03.2017**
(21) Anmeldenummer: 14000499.5
(22) Anmeldetag: 18.01.2011
(51) Int. Cl.: G01N 25/48, H01J 49/04, G01N 5/04, G01N 30/72

(54) **THERMOANALYSEVORRICHTUNG UND THERMOANALYSEVERFAHREN MIT ZUSÄTZLICHER ANALYSE DER FREIGESETZTEN GASE**
APPARATUS AND METHOD FOR THERMAL ANALYSIS WITH EVAPORATED GAS ANALYSIS
DISPOSITIF ET PROCÉDÉ POUR L'ANALYSE THERMIQUE AVEC ANALYSE DES GAZ EVAPORÉS

(43) Veröffentlichungstag der Anmeldung: 21.05.2014
(62) Teilanmeldung aus: 11711439.7
(73) Patentinhaber: Netzsch Gerätebau GmbH, 95100 Selb (DE)
(72) Erfinder: Blumm, Jürgen, 95100 Selb (DE)
(74) Vertreter: Roos, Peter

(56) Entgegenhaltungen:
- DE-A1- 3 226 803
- US-A- 3 344 654
- P. A. BARNES ET AL: "High-Performance Evolved Gas Analysis System for Catalyst Characterization", ANALYTICAL CHEMISTRY, Bd. 66, Nr. 14, 1. Juli 1994 (1994-07-01), Seiten 2226-2231, XP055004720, ISSN: 0003-2700, DOI: 10.1021/ac00086a005

## Beschreibung

Die vorliegende Erfindung betrifft eine Thermoanalysevorrichtung nach dem Oberbegriff des Anspruchs 1 sowie ein Thermoanalyseverfahren nach dem Oberbegriff des Anspruchs 10.

Vorrichtungen und Verfahren zur "Thermoanalyse" sind aus dem Stand der Technik bekannt und mittlerweile weltweit insbesondere zu Zwecken einer Materialcharakterisierung etabliert. Damit können beispielsweise Polymere, pharmazeutische Werkstoffe, Textilien, Metalle, Keramiken und andere organische oder anorganische Materialien analysiert und charakterisiert werden.

Bei der "Thermoanalyse" (oder "Thermischen Analyse") wird eine zu untersuchende Probe mittels einer Temperiereinrichtung (z. B. elektrische Heizeinrichtung) einer kontrollierten Temperaturveränderung, z. B. einem voreinstellbaren "Temperaturprogramm" unterworfen. Die Probe kann hierbei aufgeheizt, abgekühlt oder auf einer konstanten Temperatur gehalten werden.

Eine möglichst genaue Einhaltung des Temperaturprogrammes setzt in der Regel vorraus, dass die Probentemperatur kontinuierlich erfasst, beispielsweise mit einem Temperaturmesssensor gemessen wird, so dass ein für die Probentemperatur repräsentatives Erfassungs- bzw. Messsignal für eine Regelung (z. B. PID-Regelung) der Probentemperatur nutzbar ist.

Außerdem wird während der kontrollierten Veränderung der Probentemperatur kontinuierlich wenigstens ein für eine (weitere) Eigenschaft der Probe charakteristisches (weiteres) Signal erfasst und zusammen mit dem Verlauf der Probentemperatur aufgezeichnet.

Die Thermoanalyse ermöglicht somit die Untersuchung bzw. Charakterisierung von temperaturbedingten Änderungen von Eigenschaften eines Probenmaterials, einschließlich thermisch in der Probe ausgelösten Vorgängen.

Es versteht sich, dass der hier verwendete Begriff "kontinuierlich" im Zusammenhang mit einer Erfassung (z. B. Messung) von Signalen auch eine quasi-kontinuierliche, beispielsweise in relativ kleinen Zeitabständen (z. B. periodisch) erfolgende Erfassung einschließt.

Je nachdem, welches weitere Signal bzw. welche weiteren Signale (neben der Probentemperatur) während der kontrollierten Veränderung der Probentemperatur erfasst werden, lassen sich Thermoanalyseverfahren noch näher spezifizieren. Derartige speziellere Methoden der Thermoanalyse sind ebenfalls aus dem Stand der Technik bekannt und bedürfen daher hier keiner näheren Erläuterung. Lediglich beispielhaft seien folgende Methoden genannt: Differentialthermoanalyse (DTA), Differenzkalorimetrie (DSC) bzw. Dynamische Differenzkalorimetrie (DDK), Thermogravimetrie (TG) bzw. Thermogravimetrische Analyse (TGA) und Thermomechanische Analyse (TMA).

Für die Charakterisierung von thermischen Abdampf- und Zersetzungseffekten werden häufig die TG oder eine "Simultane Thermische Analyse" (STA), d. h. eine Kombination aus TG und DSC bzw. DDK verwendet. In einer Weiterbildung kann hierbei neben der Erfassung eines Masseverlustes der Probe z. B. auch gleichzeitig eine Untersuchung von Gasen erfolgen, die von der Probe freigesetzt werden. Zur Gasuntersuchung kann z.B. Fourier-Transformations-Infrarotspektroskopie (FTIR) oder Massenspektrometrie (MS, beispielsweise unter Verwendung eines Quadrupol-Massenspektrometers) eingesetzt werden.

Eine derartige Thermoanalyse ist beispielsweise aus Barnes et al: "High-Performance Evolved Gas Analysis System for Catalyst Characterization", Anal. Chem. 1994, 66, S.2226-2231, bekannt. Die Heizrate wird hier in Abhängigkeit vom gemessenen Signal während der Messung angepasst.

Zwar bieten diese bekannten Methoden eine Möglichkeit zur Analyse von flüchtigen Probenbestandteilen und Zersetzungsprodukten. Allerdings stoßen diese Methoden in der Praxis dann an ihre Grenzen, wenn im zeitlichen Verlauf der Thermoanalyse mehrere oder sogar sehr viele verschiedene Bestandteile bzw. Zersetzungsprodukte freigesetzt werden und ein möglichst guter "zeit- bzw. temperaturaufgelöstes" Gasanalysevorgang erhalten werden soll.

Zu bedenken ist hierbei, dass die Untersuchung von Gasen mit den bekannten Gasanalyseeinrichtungen, abhängig von deren Genauigkeit, relativ zeitaufwändig ist - gemessen an der typischerweise für den Ablauf einer Thermoanalyse vorgesehenen Dauer bzw. im Hinblick auf die bei einem Temperaturprogramm typischerweise vorgesehenen Temperaturveränderungsraten (im Bereich von etwa 1 K/min bis 50 K/min).

Daher scheiterte bislang eine genauere Untersuchung von thermisch ausgelösten Gasfreisetzungsvorgängen, insbesondere eine genauere Charakterisierung der Gaszusammensetzung, wenn viel verschiedene Gase gleichzeitig freigesetzt werden.

Vor diesem Hintergrund ist es eine Aufgabe der vorliegenden Erfindung, eine Vorrichtung bzw. ein Verfahren der eingangs genannten Art so zu verbessern, dass eine besser zeit- bzw. temperaturaufgelöste Untersuchung von flüchtigen Bestandteilen und Zersetzungsprodukten ermöglicht wird und eine Trennung der verschiedenen Gase für der eigentlichen Gasanalyse realisiert.

Diese Aufgabe wird gemäß der Erfindung durch eine Vorrichtung nach Anspruch 1 bzw. ein Verfahren nach Anspruch 10 gelöst. Die abhängigen Ansprüche betreffen vorteilhafte Weiterbildungen der erfindungsgemäßen Vorrichtung, wobei diese Weiterbildungen, einzeln oder in beliebiger Kombination, in analoger Weise auch für das erfindungsgemäße Verfahren vorgesehen werden können.

Die Grundidee der Erfindung besteht darin, eine spezielle "funktionale Kopplung" zwischen der Steuerung des Ventil/Injektionssystems der Gasanalyseeinrichtung einerseits und der Untersuchung von freigesetzten Gasen andererseits vorzusehen.

Außerdem kann während der Veränderung der Temperatur der Probe deren Temperierung gemäß eines Steueralgorithmus unter Berücksichtigung des erfassten Signals gesteuert und/oder die Untersuchung der Gase in gesteuerter Weise und gemäß eines Steueralgorithmus unter Berücksichtigung des erfassten Signals durchgeführt werden.

Die im Rahmen der Erfindung besonders interessierenden Zeitpunkte bzw. Probentemperaturen, bei welchen eine Gasfreisetzung erfolgt, können durch die kontinuierliche Erfassung des Signals in einfacher Weise und in Echtzeit detektiert werden.

Um sodann ebenfalls noch während der laufenden Thermoanalyse ein diesen Zeitpunkten bzw. Temperaturen zuordenbares Ergebnis der Gasuntersuchung zu erhalten, kann bei Detektion eines "Freisetzungsvorganges" beispielsweise für eine gewisse Zeit lang die Veränderung der Probentemperatur unterbrochen und die Probentemperatur stattdessen konstant gehalten werden, um die bei der betreffenden Temperatur freigesetzten Gase zu untersuchen.

Erfindungsgemäß kann daher bei Detektion eines "Freisetzungsvorganges" relativ rasch und bevorzugt kurzzeitig eine bestimmte Menge der freigesetzten Gase von der Probe weg und der Gasuntersuchung zugeführt werden.

In diesem Fall wird die Untersuchung der Gase in gesteuerter Weise unter Berücksichtigung des erfassten Signals durchgeführt. Ganz allgemein soll der Begriff "in gesteuerter Weise" im Zusammenhang mit der Gasuntersuchung jede Untersuchung bezeichnen, bei der nicht fortwährend die in der Umgebung der Probe befindlichen Gase untersucht werden, sondern der Betrieb einer zur Untersuchung eingesetzten Gasanalyseeinrichtung in irgendeiner Weise aktiv angesteuert wird, einschließlich einer etwaigen aktiven Ansteuerung eines Transfers von Gasen von der Probe zur Gasanalyseeinrichtung.

Die Steuerung eines solchen Gastransfers wird erfindungsgemäß durch eine der Gasanalyseeinrichtung vorgeschaltete Anordnung eines oder mehrerer Ventile und/oder so genannter (Gas-)Injektoren bewerkstelligt , nachfolgend auch als "Ventil/Injektionssystem" bezeichnet.

In einer besonders bevorzugten Ausführungsform umfasst die Gasanalyseeinrichtung einen Gas-Chromatographen oder einen Gas-Chromatographen zur Trennung der verschiedenen Gase mit nachgeschaltetem Massenspektrometer (z. B. Quadrupol-Massenspektrometer) zur eigentlichen Gasanalyse.

In einer Ausführungsform ist ein die zu untersuchende Probe enthaltener Probenraum über eine Transferleitung mit der Gasanalyseeinrichtung verbunden. Zur Vermeidung einer Adsorption von transferierten Gasen in der Transferleitung ist die Transferleitung beheizbar ausgebildet. Dasselbe gilt für ein gegebenenfalls am Anfang, am Ende oder im Verlauf der Transferleitung angeordnetes Ventil/Injektionssystem.

In einer Ausführungsform umfasst das Ventil/Injektionssystem eine Anordnung mehrerer koordiniert ansteuerbarer Ventile, welche es ermöglichen, zu einem gewünschten Zeitpunkt eine gewisse Gasmenge in die Ventilanordnung einströmen zu lassen und nachfolgend zu einem gewünschten Zeitpunkt bzw. über eine gewünschte Zeitspanne an anderer Stelle in Richtung zur Gasanalyseeinrichtung hin wieder abzugeben. Damit kann vorteilhaft bei Detektion eines Freisetzungsvorganges eine bestimmte Gasmenge aus dem Probenraum bzw. der Transferleitung entnommen und nachfolgend der Gasuntersuchung zugeführt werden.

Alternativ oder zusätzlich zu einer derartigen Ventilanordnung kann das Ventil/Injektionssystem auch einen so genannten (Gas-)Injektor aufweisen. Derartige Injektoren sind z. B. als Eingangskomponente von Gas-Chromatographen bekannt. Im Rahmen der Erfindung geeignete Ventilanordnungen und Injektoren sind z. B. von der Fa. JAS ("joint analytical systems") kommerziell erhältlich.

Zur Durchführung des Steueralgorithmus, mittels welchem die Temperiereinrichtung und/oder die Gasanalyseeinrichtung gesteuert wird, kann vorteilhaft ein elektronisches und insbesondere ein softwarebasiertes System verwendet werden, also z. B. eine programmgesteuerte Steuereinrichtung (z. B. enthaltend einen Mikrocontroller). Einem derartigen Steuersystem bzw. einer Steuereinrichtung kann das mittels der Erfassungseinrichtung kontinuierlich erfasste Signal (und bevorzugt auch ein für die aktuelle Probentemperatur repräsentatives Signal) zugeführt werden, um gemäß des unter Verwendung von darauf ablaufender Software implementierten Steueralgorithmus geeignete Steuersignale zur Steuerung der Temperiereinrichtung bzw. Gasanalyseeinrichtung zu generieren (berechnen).

Die hierfür verwendete Steuereinrichtung kann gleichzeitig diejenige Einrichtung sein bzw. mit derjenigen Einrichtung baulich zusammengefasst sein, welche eine Temperaturregelung im Rahmen der Probentemperierung realisiert. Auch kann die Steuereinrichtung, insbesondere im Falle einer softwarebasierten Ausführung, für eine Auswertung der von der Gasanalyseeinrichtung gelieferten Untersuchungsergebnisse (und auch für deren Korrelation mit Freisetzungstemperaturen) eingesetzt werden.

In einer Ausführungsform ist vorgesehen, dass der Steueralgorithmus eine Vorverarbeitung des von der Erfassungseinrichtung erfassten Signals zur kontinuierlichen Ermittlung einer Änderungsrate dieses Signals vorsieht.

In einer Ausführungsform handelt es sich bei dem Signal um ein die Masse der Probe repräsentierendes Signal ("Massesignal"). Wenn in diesem Fall kontinuierlich eine zeitliche Änderungsrate dieses Massesignals gebildet wird, so erhält man eine zeitliche Massenänderungsrate. Anhand einer Überwachung der Massenänderungsrate während der kontrollierten Veränderung der Probentemperatur lässt sich in einfacher Weise ein Zeitpunkt bzw. eine Temperatur bestimmen, bei welchem bzw. bei welcher Gase von der Probe freigesetzt werden, sei es durch einen Abdampfungsprozess oder einen Zersetzungsprozess. Das Einsetzen eines solchen Prozesses wird sich durch einen merklichen Anstieg des Absolutwertes der (negativen) Massenänderungsrate bemerkbar machen.

Somit kann als ein Kriterium für die Auslösung eines "Steuervorganges", bei welchem Einfluss auf den Betrieb der Temperiereinrichtung und/oder der Gasanalyseeinrichtung genommen wird, z. B. der Umstand herangezogen werden, dass der Absolutwert der Massenänderungsrate einen bestimmten Schwellwert überschreitet, der z. B. vorab durch einen Bediener eingestellt wurde.

Ganz allgemein ist es von Vorteil, wenn wenigstens ein Steuerparameter des bei der Erfindung verwendeten Steueralgorithmus durch einen Bediener voreinstellbar ist. Der Begriff "Steuerparameter" soll hierbei eine als Eingangsgröße in den Steueralgorithmus eingehende Größe bezeichnen, welche somit Einfluss auf die vom Steueralgorithmus bewirkte Steuerung (insbesondere der Temperiereinrichtung und/oder Gasanalyseeinrichtung) besitzt und welche bereits spätestens zu Beginn der kontrollierten Veränderung der Probentemperatur festgelegt wird. Es kann vorgesehen sein, dass ein solcher Steuerparameter sodann während des Thermoanalyseverfahrens nicht verändert wird.

Beispielsweise kann der Steueralgorithmus folgende, bevorzugt vorab einstellbare Steuerparameter berücksichtigen: Zeitintervall zwischen aufeinanderfolgenden periodischen Messungen der Probentemperatur; Zeitintervall zwischen aufeinanderfolgenden periodischen Erfassungen des Signals bzw. der Signale; Zeitliche Soll-Änderungsrate der Probentemperatur im Falle einer linearen "Temperaturrampe" gemäß eines Temperaturprogrammes; etc.

In einer Ausführungsform sieht der Steueralgorithmus vor, anhand einer Erfüllung vorbestimmter (mathematischer) Kriterien durch das erfasste Signal und/oder durch eine ermittelte Änderungsrate dieses Signals ein "Steuerereignis" für die Temperiereinrichtung bzw. die Gasanalyseeinrichtung auszulösen.

Auch derartige Kriterien beruhen auf einem oder mehreren Steuerparametern des Steueralgorithmus. Falls das Kriterium z. B. darin besteht, dass eine ermittelte Änderungsrate (z. B. die vorstehend erwähnte Massenänderungsrate) einen bestimmten Schwellwert überschreitet, so kann dieser Schwellwert als ein Steuerparameter angesehen werden, der bevorzugt (ebenso wie andere Steuerparameter) durch einen Bediener voreinstellbar sein kann.

Jeder "Steuervorgang", welcher im Verlauf der kontrollierten Veränderung der Probentemperatur immer dann ausgelöst wird, wenn ein vorbestimmtes Kriterium erfüllt wird, bedeutet eine irgendwie geartete Veränderung des Betriebes der Temperiereinrichtung und/oder der Gasanalyseeinrichtung (im Vergleich zu dem Fall, dass kein "Steuervorgang" ausgelöst wird).

In einer Ausführungsform ist beispielsweise vorgesehen, dass der Steuervorgang eine Änderung einer ansonsten (ohne den Steuervorgang) von der Temperiereinrichtung bewirkten Probentemperatur-Änderungsrate und/oder einen Betriebsbeginn der Gasanalyseeinrichtung umfasst.

Falls also beispielsweise durch ein vorab festgelegtes Temperaturprogramm eine im zeitlichen Verlauf streng monoton steigende Probentemperatur (z. B. mit einer konstanten zeitlichen Änderungsrate der Probentemperatur) vorgesehen wird, so kann die Auslösung des Steuervorganges dazu führen, dass ab diesem Zeitpunkt eine von der ursprünglichen Vorgabe abweichende Änderungsrate der Probentemperatur bewirkt wird, bevorzugt eine wesentlich kleinere Änderungsrate, weiter bevorzugt sogar eine Änderungsrate von Null (Probentemperatur wird konstant gehalten).

Was eine Beendigung dieser "abweichenden Temperierung" ab dem Beginn des "Steuervorganges" anbelangt, so gibt es insbesondere zwei Möglichkeiten:
Zum einen kann vorgesehen sein, dass diese besondere Temperierung (z. B. mit Aufrechterhaltung einer konstanten Probentemperatur) nach einer vorbestimmten Zeitspanne wieder beendet wird. Diese Zeitspanne kann z. B. als voreinstellbarer Parameter vorgesehen sein. Sodann kann das vorab festgelegte Temperaturprogramm z. B. an derjenigen Stelle (Temperatur) fortgesetzt werden, an welcher es durch den Steuervorgang unterbrochen wurde.

Die Dauer der Unterbrechung des Temperaturprogrammes kann z. B. derjenigen Dauer entsprechen, welche von der Gasanalyseeinrichtung typischerweise benötigt wird, um eine bestimmte Gasmenge einer Untersuchung zu unterziehen. Eine solche Gasmenge kann z. B. infolge der Auslösung des Steuervorganges zur Gasanalyseeinrichtung transferiert werden.

Zum anderen kann eine Beendigung der besonderen Temperierung zu demjenigen Zeitpunkt vorgesehen sein, zu welchem die Untersuchung von freigesetzten Gasen durch die Gasanalyseeinrichtung tatsächlich beendet ist, was z. B. durch eine entsprechende Rückmeldung der Gasanalyseeinrichtung bzw. einer daran angeschlossenen Auswerteeinrichtung realisiert werden kann.

Alternativ oder zusätzlich zu einer Änderung des Betriebes der Temperiereinrichtung kann durch den Steuervorgang eine Änderung des Betriebes der Gasanalyseeinrichtung erfolgen. In einer bevorzugten Ausführungsform ist z. B. vorgesehen, dass bei Auslösung des Steuervorganges eine bestimmte Menge von Gasen aus der Umgebung der Probe abgeführt und der Gasuntersuchung zugeführt wird. Dies kann z. B. durch eine entsprechende Ansteuerung des weiter oben bereits erwähnten Ventil/Injektionssystems realisiert werden. Eine solche Ansteuerung des Ventil/Injektionssystems bedeutet einen "Betriebsbeginn der Gasanalyseeinrichtung".

In einer Ausführungsform ist vorgesehen, dass der Steueralgorithmus ein vordefiniertes Temperaturprogramm mit einer bestimmten zeitabhängigen Veränderung der Temperatur der Probe und eine zeitweilige Unterbrechung des Temperaturprogrammes zu einem Zeitpunkt vorsieht, an welchem eine Erfüllung vorbestimmter Kriterien durch das erfasste Signal und/oder durch eine ermittelte Änderungsrate dieses Signals detektiert wird.

In einer Weiterbildung ist vorgesehen, dass während der Unterbrechung der Temperaturveränderung die Gasanalyseeinrichtung betrieben wird und der Steueralgorithmus eine Fortsetzung der Temperaturveränderung nach einem Abschluss einer Gasuntersuchung mittels der Gasanalyseeinrichtung vorsieht.

In einer Ausführungsform ist vorgesehen, dass die Thermoanalysevorrichtung ferner eine Auswerteeinrichtung umfasst, welche nach Abschluss der kontrollierten Veränderung der Temperatur der Probe auf Basis der hierbei gemessenen Temperatur der Probe und einem Ergebnis der Gasuntersuchung ein Auswertungsergebnis liefert, welches die Temperatur eines thermischen Zersetzungs- oder Verdampfungsvorganges angibt und bevorzugt ferner eine Zuordnung dieser Temperatur zu einem betreffenden Ergebnis der Gasuntersuchung beinhaltet. Damit kann vorteilhaft z. B. eine zeit- bzw. temperaturaufgelöste Analyse von thermischen Zersetzungsprodukten erfolgen, wobei in einem vollautomatischen Betrieb auch eine direkte Korrelation zwischen Zersetzungstemperatur(en) und Gasanalyseergebnis(en) erfolgen kann.

Die erfindungsgemäße Thermoanalysevorrichtung bzw. das damit durchführbare Thermoanalyseverfahren kann besonders vorteilhaft zur Charakterisierung von Substanzen, insbesondere technischen Werkstoffen, eingesetzt werden. Im Gegensatz zu bekannten Methoden ist die Aussagekraft bzw. Detailliertheit des Analyseergebnisses beträchtlich erhöht.

Die Erfindung wird nachfolgend anhand eines Ausführungsbeispiels mit Bezug auf die beigefügten Zeichnungen weiter beschrieben. Es stellen dar:
- Fig. 1: eine erfindungsgemäße Thermoanalysevorrichtung gemäß eines Ausführungsbeispiels,
- Fig. 2: einen beispielhaften zeitlichen Verlauf verschiedener Größen bei einem mit der Vorrichtung von Fig. 1 durchgeführten Thermoanalyseverfahren,
- Fig. 3: den zeitlichen Verlauf eines in einem bestimmten Stadium des Thermoanalyseverfahrens gemäß Fig. 2 aufgezeichneten Massenspektrometer-Gesamtsignals, und
- Fig. 4: das für ein bestimmtes Stadium im Massenspektrometrieverlauf gemäß Fig. 3 gemessene Massenspektrum (Fig. 4 oben) und zum Vergleich ein entsprechendes Literaturspektrum (Fig. 4 unten).

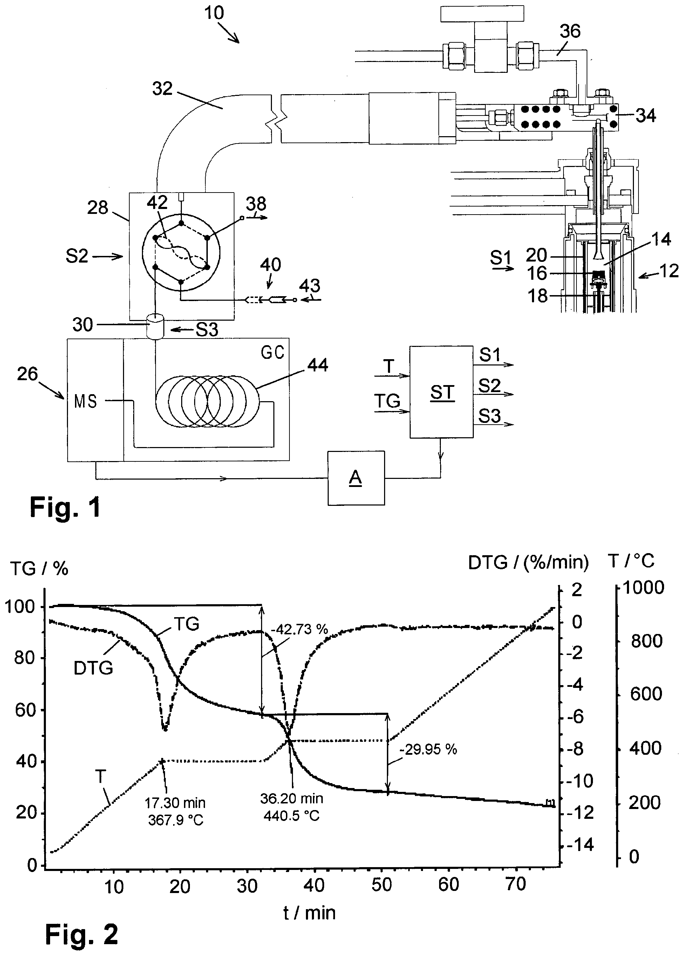

Fig. 1 zeigt eine Thermoanalysevorrichtung 10, umfassend eine Thermogravimetriezelle 12 mit einem darin ausgebildeten Probenraum 14, in welchem eine Probe 16 auf einem Probenhalter 18 angeordnet ist.

Eine außerdem im Probenraum 14 angeordnete elektrische Heizung (z. B. Mikro-Ofen) 20 bildet zusammen mit einer den Heizungsbetrieb steuernden Steuereinheit ST und einer (nicht dargestellten) Sensorik zur Messung der Temperatur T der Probe 16 eine steuerbare Temperiereinrichtung zur kontrollierten Veränderung der Probentemperatur T im Verlauf einer Thermoanalyse.

Die Steuereinheit ST ist im dargestellten Ausführungsbeispiel eine prozessorgesteuerte Einrichtung, auf welcher softwarebasiert ein entsprechender Steueralgorithmus abläuft, der unter anderem die kontrollierte Veränderung der Probentemperatur T, hier z.B. ein kontrolliertes Aufheizen der Probe 16 mit einer z.B. konstanten zeitlichen Aufheizrate bewirkt. Die Steuereinheit ST gibt hierfür ein Steuersignal S1 zur Steuerung der Heizleistung der elektrischen Heizung 20 aus und regelt somit die gewünschte Aufheizung der Probe 16 unter Berücksichtigung der kontinuierlich gemessenen tatsächlichen Probentemperatur T.

Während der Veränderung der Probentemperatur T im Verlauf der Thermoanalyse können Signale erfasst und aufgezeichnet werden, die für verschiedene Eigenschaften der Probe 16 charakteristisch sind.

Im dargestellten Beispiel wird z. B. kontinuierlich die Masse der Probe 16 gemessen, wofür der Probenhalter 18 mit einer (nicht dargestellten) Waage verbunden ist bzw. eine solche Waage enthält. Ein die aktuelle Probenmasse angebendes Massesignal TG wird von der Waage an die Steuereinheit ST geliefert.

Die bis hierher beschriebenen Komponenten der Vorrichtung 10 bilden als solche eine Thermogravimetrievorrichtung von herkömmlicher Art. Damit ist es möglich, temperaturbedingte Änderungen der Probenmasse TG zeit- bzw. temperaturaufgelöst zu messen und aufzuzeichnen.

In Fig. 2 ist beispielhaft der Vorgang einer thermogravimetrischen Untersuchung einer bestimmten Gummimischung mittels der in Fig. 1 dargestellten Vorrichtung 10 dargestellt. Die gepunktete Linie in Fig. 2 zeigt den Verlauf der Probentemperatur T, und die durchgezogene Linie zeigt den Verlauf der Probenmasse TG, jeweils aufgetragen gegen die Zeit t.

Daraus ist ersichtlich, dass im Verlauf der Aufheizung der Probe 16 deren Masse TG abnimmt, was im dargestellten Beispiel auf thermisch hervorgerufene Zersetzungsprozesse zurückzuführen ist.

In nachfolgend beschriebener Weise gestattet die Vorrichtung 10 eine insofern sehr aussagekräftige Thermoanalyse, als damit eine direkte Korrelation zwischen einzelnen Zersetzungstemperaturen bzw. "Masseverluststufen" und der Zusammensetzung der hierbei freigesetzten flüchtigen Bestandteile (Gase) ermöglicht wird.

Zu diesem Zweck umfasst die Vorrichtung 10 des Weiteren eine Gasanalyseeinrichtung 26, die im dargestellten Beispiel aus einem Gas-Chromatographen GC mit nachgeschaltetem Quadrupol-Massenspektrometer MS gebildet ist und über eine beheizbare Transferleitung 32, eine steuerbare Ventilanordnung 28 und ein steuerbares Injektorsystem 30 mit der Thermogravimetriezelle 12 gekoppelt ist.

Die Transferleitung 32 ist über einen Adapter 34 an die Thermogravimetriezelle 12 angeschlossen, wobei im Bereich des Adapters 34 eine Bypass-Leitung 36 einmündet, mittels welcher die Transferleitung 32 und die nachgeschalteten Komponenten 28, 30 und 26 mit Helium "gespült" werden können.

Die Ventilanordnung 28 bildet zusammen mit dem Injektorsystem 30 ein von der Steuereinheit ST ansteuerbares Ventil/Injektionssystem für die Gasanalyseeinrichtung 26, wobei über die Bypass-Leitung 36 einströmendes Helium (oder ein anderes Inertgas) als Trägergas für die damit der Gasanalyseeinrichtung 26 zuführbaren Gase dient.

Die steuerbare Ventilanordnung 28 besitzt sechs Ventilanschlüsse, die in der Fig. 1 durch sechs Punkte symbolisiert sind und welche in verschiedener Weise, je nach "Schaltzustand", über (nicht dargestellte) Einzelventile miteinander verbindbar sind. Wie aus der Figur ersichtlich, ist einer der Ventilanschlüsse direkt mit dem Ende der Transferleitung 32 verbunden. Ein weiterer Ventilanschluss ist permanent mit einer (nicht dargestellten) Vakuumpumpe verbunden (Ein Pfeil 38 symbolisiert die Absaugung an dieser Stelle). Ein weiterer Ventilanschluss ist über ein Ventil 40 mit einem Trägergas-Zufuhranschluss verbunden (Ein Pfeil 43 symbolisiert die Trägergaszufuhr an dieser Stelle). Bei dem Trägergas handelt es sich hier z. B. um Helium, welches an dem Ventil 40 mit einem Druck von z. B. einigen bar ansteht. Ein weiterer Ventilanschluss ist mit einem Eingang des Injektorsystems 30 verbunden.

Die Ventilanordnung 28 wird durch den in der Steuereinheit ST ablaufenden Steueralgorithmus über ein zugeführtes Steuersignal S2 in einen von zwei möglichen Schaltzuständen gesteuert.

In einem ersten Schaltzustand sind die Ventilanschlüsse derart miteinander verbunden, wie dies in der Figur durch die durchgezogenen Linien zwischen den Ventilanschlüssen symbolisiert ist, und das Trägergas-Zufuhrventil 40 ist geöffnet. In diesem ersten Schaltzustand erfolgt keine Untersuchung von aus dem Probenraum 14 stammenden Gasen. Vielmehr wird in diesem Schaltzustand "mit Inertgas (Helium) gespült". Über die Bypass-Leitung 36 zugeführtes Helium strömt durch die Transferleitung 32 und weiter durch die Ventilanordnung 28 zum Absauganschluss (vgl. Pfeil 38). Außerdem wird Helium über das geöffnete Ventil 40 zugeführt und über die Ventilanordnung 28 zum Injektorsystem 30 weitergegeben.

Wenn im Verlauf der Thermoanalyse der Probe 16 ein "Gasfreisetzungsvorgang" detektiert wird, so wird durch die Steuereinheit ST ein "Steuervorgang" ausgelöst, welches über das Steuersignal S2 eine Umschaltung der Ventilanordnung 28 in einen zweiten Schaltzustand bewirkt.

In diesem zweiten Schaltzustand der Ventilanordnung 28 sind deren Ventilanschlüsse derart miteinander verbunden, wie es in der Figur durch die gestrichelten Linien zwischen den Ventilanschlüssen symbolisiert ist. Dieser zweite Schaltzustand dient zur Versorgung des Injektorsystems 30 mit einer im Bereich der Ventilanordnung 28 bevorrateten "Gasprobe", die zuvor aus dem Probenraum 14 über die Transferleitung 32 in die Ventilanordnung 28 hinein zugeführt wurde. Die Zufuhr dieser Gasprobe wird noch im ersten Schaltzustand mittels der Durchströmung der Transferleitung 32 mit Helium getrieben. Wenn sodann die Ventilanordnung 28 jedoch in den zweiten Schaltzustand gebracht wird, so wird eine gewisse Menge der von der Probe 16 stammenden Gase in einem Gasprobenreservoir 42 der Ventilanordnung 28 "gefangen" und zur Versorgung des Injektorsystems 30 zur Verfügung gestellt. In diesem zweiten Schaltzustand ist das Trägergas-Zufuhrventil 40 geschlossen.

In an sich bekannter Weise wird die Gasprobe mittels des Injektorsystems 30 dann einer Kapillare ("Trennsäule") 44 des Gas-Chromatographen GC zugeführt. Mit jeweiligen zeitlichen Verzögerungen (Retentionszeiten) gelangen die einzelnen Gase bzw. Gasbestandteile dann zum Massenspektrometer MS. Das Injektorsystem 30 wird hierbei durch die Steuereinheit ST mittels eines Steuersignals S3 angesteuert, um die Gasprobe in die Kapillare 44 einzuleiten.

Die Ergebnisse der während der Thermoanalyse mittels der Gasanalyseeinrichtung 26 durchgeführten Gasuntersuchung(en), hier also ein oder mehrere Retentionszeitaufgelöste Massenspektren werden mit den im Bereich der Steuereinheit ST verfügbaren bzw. aufgezeichneten Informationen betreffend den Verlauf der Probentemperatur T und des oder der weiteren erfassten Signale in einer Auswerteeinrichtung A zusammengeführt und mittels dieser Auswerteeinrichtung A zumindest teilweise automatisch ausgewertet.

Eine konstruktive Besonderheit der Thermoanalysevorrichtung 10 besteht somit bereits darin, dass eine steuerbar ausgebildete Gasanalyseeinrichtung (28, 30, 26) in einer direkten Kopplung (über die Transferleitung 32) mit einem Gerät zur Thermoanalyse (Thermogravimetriezelle 12) eingesetzt wird.

Hinsichtlich der Ausbildung der Steuereinheit ST bzw. des damit realisierten Thermoanalyseverfahrens besteht eine weitere Besonderheit der Vorrichtung 10 darin, dass während der kontrollierten Veränderung der Probentemperatur T im Falle der Auslösung des "Steuervorganges" außerdem eine nachfolgend detaillierter beschriebene besondere Ansteuerung/Betriebsänderung der Probentemperatur-Temperierung vorgenommen wird.

Ein in der Steuereinheit ST ablaufender Steueralgorithmus beinhaltet eine Vorverarbeitung des von der Thermowaage gelieferten Massesignals TG, die darin besteht, dass aus dem Signal TG kontinuierlich (in "Echtzeit", z. B. periodisch in kleinen Zeitabständen) eine zeitliche Änderungsrate DTG der Probenmasse ermittelt wird. Dieses Masseänderungssignal DTG ist in Fig. 2 ebenfalls eingezeichnet.

Der Wert des Änderungssignals DTG wird während der Thermoanalyse überwacht. Falls der Wert des Signals DTG ein vorbestimmtes Kriterium erfüllt, hier z. B. wenn der Absolutwert des Signals DTG größer als ein vorab eingestellter Schwellwert von 5 %/min wird, so wird der " Steuervorgang" ausgelöst, welcher im dargestellten Beispiel dazu führt, dass die normalerweise mit einer konstanten Aufheizrate von 20 K/min vorgesehene Erhöhung der Probentemperatur T automatisch unterbrochen wird und die vorstehend bereits beschriebene Gasuntersuchung mittels der Gasanalyseeinrichtung 26 initiiert wird (Ansteuerung der Ventilanordnung 28 und des Injektorsystems 30).

Mit anderen Worten wird bei der Vorrichtung 10 sowohl die Temperierung der Probe 16 als auch die Untersuchung von davon freigesetzten Gasen gemäß eines Steueralgorithmus unter Berücksichtigung des seitens der Thermogravimetrie erfassten Massesignals TG (nach Weiterverarbeitung zu einem Masseänderungssignal DTG) gesteuert.

Bei dem in Fig. 2 beispielhaft dargestellten Verlauf einer Thermoanalyse wird ein solcher Steuervorgang erstmalig nach einer Zeit t von 17,3 min und einer Probentemperatur T von 368 °C ausgelöst. Der hierfür maßgebliche Schwellwert für das Masseänderungssignal DTG, im Beispiel -5 %/min, wurde als ein "Steuerparameter" vorab vom Bediener eingestellt.

Wie aus Fig. 2 ersichtlich, wird ab diesem Zeitpunkt von t = 17,3 min das Aufheizen der Probe 16 eine bestimmte Zeit lang (im Beispiel etwa 15 min) angehalten, und das an der Probe 16 freiwerdende Zersetzungsgas wird kurzzeitig in die Ventilanordnung 28 einströmen gelassen bzw. über das Ventil/Injektionssystem 28, 30 dem Gas-Chromatographen CG mit nachgeschaltetem Massenspektrometer MS zugeführt. Eine Messung von Retentionszeit-aufgelösten Massenspektren wird automatisch gestartet.

Der hier verwendete Steueralgorithmus sieht demnach zwar ein vordefiniertes Temperaturprogramm mit einer bestimmten zeitabhängigen Veränderung der Temperatur T der Probe 16 vor, welches jedoch immer dann zeitweilig unterbrochen wird, wenn ein "Steuervorgang" ausgelöst wird. Während einer solchen Unterbrechung der Veränderung der Probentemperatur T wird die Gasanalyseeinrichtung 26 zur Untersuchung einer zum Zeitpunkt der Auslösung des Steuervorganges genommenen "Gasprobe" betrieben.

Die Temperaturveränderung wird nach Abschluss des Betriebes der Gasanalyseeinrichtung 26 automatisch fortgesetzt. Im Beispiel von Fig. 2 geschieht dies bei einer Zeit t von etwa 32,5 min. Ab diesem Zeitpunkt erfolgt wieder ein "Normalbetrieb" der elektrischen Heizung 20 zur Erzielung einer Aufheizrate von 20 K/min.

Sodann wird im dargestellten Beispiel bei einer Zeit t von 36,2 min und einer Temperatur von 441°C erneut ein "Steuervorgang" ausgelöst. Dieser Steuervorgang wiederum bewirkt dieselben Steuerungsvorgänge wie vorstehend für das bei t = 17,3 min liegende Steuervorgang bereits beschrieben. Somit wird auch zum Zeitpunkt t = 36,2 min automatisch eine Gasuntersuchung mittels der Gasanalyseeinrichtung 26 gestartet und die Aufheizung der Probe 16 unterbrochen. Nach Abschluss dieser Messung wird das Temperaturprogramm in der Thermogravimetriezelle 12 fortgesetzt. Dieser "Normalbetrieb" setzt im dargestellten Beispiel wieder bei einer Zeit t von 51,0 min ein.

Wie aus Fig. 2 ersichtlich, wird im Beispiel sodann kein weiterer Steuervorgang mehr ausgelöst, bis die Probentemperatur T bei einer Zeit t von 74,5 min schließlich ihren vorab festgelegten Endwert (hier: etwa 925 °C) erreicht hat und das Thermogravimetrieverfahren daher beendet wird.

Durch die spezielle funktionale Kopplung der Thermogravimetrie einerseits und der Gasanalytik andererseits bzw. durch die spezielle Ansteuerung der Gas-Chromatographie bzw. Gas-Chromatographie mit nachgeschalteter Massenspektrometrie ist es vorteilhaft möglich, die Ergebnisse der Gasanalytik direkt einer "Temperaturstufe" zuzuordnen, ohne dass hierfür ein Bedienereingriff notwendig ist. Im dargestellten Beispiel werden mittels der Auswerteeinheit A die Ergebnisse der Gasuntersuchungen (bei den Temperaturen T von 368 °C und 441 °C) automatisch den betreffenden Temperaturstufen zugeordnet und können somit dem Bediener in sehr aussagekräftiger Form geliefert werden.

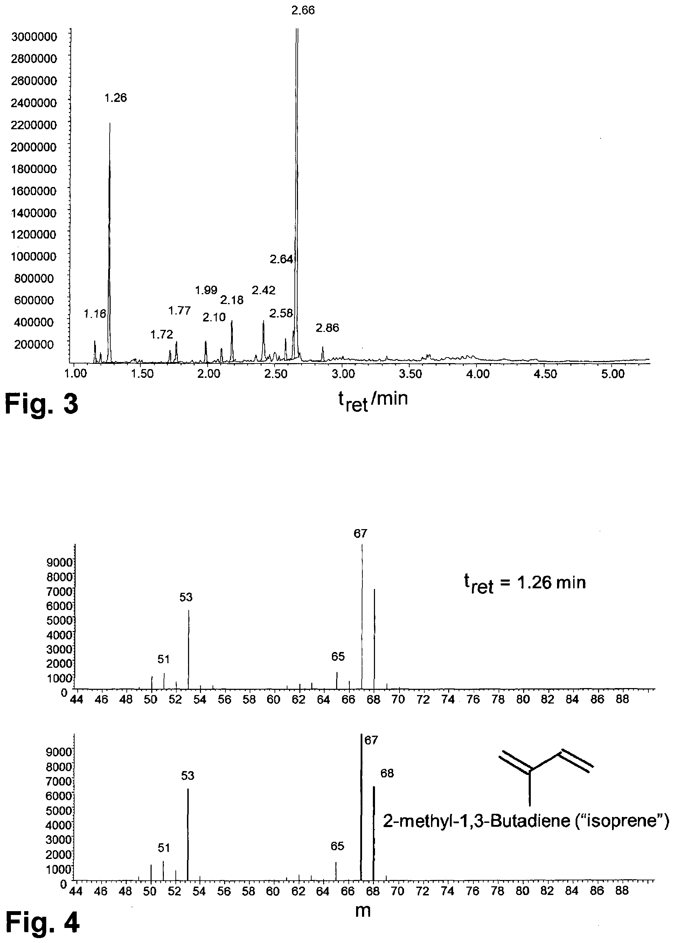

Zur Veranschaulichung des in diesem Beispiel für die "Freisetzungstemperatur" von 368 °C gelieferten Ergebnisses der Gasuntersuchung zeigt Fig. 3 ein Gesamtsignal des Massenspektrometers MS, welches über die Gesamtdauer der bei t = 17,3 min beginnenden Gasuntersuchungsphase geliefert wurde.

In Fig. 3 ist die vom Massenspektrometer MS detektierte Zählrate ("Abundance"), entsprechend dem Gesamt-Ionenstrom des Massenspektrometers, in Abhängigkeit von der seit Beginn (t = 17,3 min) der Messphase verstrichenen Zeit tᵣₑₜ aufgetragen. Die Zeit tᵣₑₜ entspricht der vorangegangenen Gas-Chromatographie-Retentionszeit der aktuell vom Massenspektrometer MS detektierten Gaskomponente.

Die in Fig. 3 ersichtlichen Signalspitzen im Massenspektrometer-Gesamtsignal verdeutlichen, dass die von der Probe 16 bei der betreffenden Temperatur T von 368 °C freigesetzten Gase aus einer Vielzahl von Komponenten bestehen.

Zur genauen Identifizierung dieser Gaskomponenten werden über die gesamte Dauer der Retention (hier: etwa 5 min) zeitaufgelöste Massenspektrogramme erfasst (und der Auswerteeinheit A zugeführt).

Fig. 4 zeigt im oberen Teil beispielhaft ein solches mit dem Massenspektrometer MS gemessenes Massenspektrum für die bei einer Retentionszeit tᵣₑₜ von 1,26 min liegende Spitze im Massenspektrometer-Gesamtsignal von Fig. 3. Im Rahmen eines von der Auswerteeinheit A teil- oder vollautomatisch automatisch durchgeführten Vergleichs derartiger Massenspektren mit bekannten Massenspektren (Literaturspektren) kann eine Identifizierung der betreffenden Gaskomponente erfolgen. Im dargestellten Beispiel wurde diese Komponente als Methylbutadien identifiziert (vgl. Literaturspektrum in Fig. 4 unten).

### Bezugszeichenliste

- 10: Thermoanalysevorrichtung
- 12: Thermogravimetriezelle
- 14: Probenraum
- 16: Probe
- 18: Probenhalter
- 20: Heizung
- 26: Gasanalyseeinrichtung
- GC: Gas-Chromatograph
- MS: Massenspektrometer
- 28: Ventilanordnung
- 30: Injektor
- 32: Transferleitung
- 34: Adapter
- 36: Bypass-Leitung
- 38: Absaugung
- 40: Ventil
- 42: Gasprobenreservoir
- 44: Kapillare
- t: Zeit
- tᵣₑₜ: Retentionszeit
- T: Probentemperatur
- TG: Probenmasse
- DTG: Massenänderungsrate

## Patentansprüche

1. Thermoanalysevorrichtung, umfassend
- eine steuerbare Temperiereinrichtung (ST, 20) zur kontrollierten Veränderung der Temperatur (T) einer zu untersuchenden Probe (16),
- eine Erfassungseinrichtung (ST) zur kontinuierlichen Erfassung wenigstens eines für eine Eigenschaft der Probe (16) charakteristischen Signals (TG) während der Veränderung der Temperatur (T), und
- eine Gasanalyseeinrichtung (26) zur Untersuchung von Gasen, die von der Probe (16) freigesetzt werden,
**dadurch gekennzeichnet, dass** die Gasanalyseeinrichtung (26) durch ein dieser vorgeschaltetes Ventil/Injektionssystem (28, 30) steuerbar (28, 30) ausgebildet ist und eingerichtet ist, gemäß eines Steueralgorithmus unter Berücksichtigung des erfassten Signals (TG) gesteuert zu werden derart, dass anhand einer Erfüllung vorbestimmter Kriterien durch das erfasste Signal (TG) und/oder durch eine ermittelte Änderungsrate (DTG) dieses Signals (TG) ein Steuervorgang für die Gasanalyseeinrichtung (26) ausgelöst wird, der eine aktive Ansteuerung eines Transfers von Gasen von der Probe (16) zur Gasanalyseeinrichtung (26) durch eine entsprechende Ansteuerung des Ventil/Injektionssystems (28, 30) umfasst.

2. Thermoanalysevorrichtung nach Anspruch 1, wobei ein die zu untersuchende Probe (16) enthaltender Probenraum (14) über eine beheizbare Transferleitung (32) und ein beheizbares Ventil/Injektionssystem (28, 30) mit der Gasanalyseeinrichtung (26) verbunden ist.

3. Thermoanalysevorrichtung nach einem der vorangehenden Ansprüche, wobei der Steueralgorithmus eine Vorverarbeitung des von der Erfassungseinrichtung (ST) erfassten Signals (TG) zur kontinuierlichen Ermittlung einer Änderungsrate (DTG) dieses Signals (TG) vorsieht.

4. Thermoanalysevorrichtung nach einem der vorangehenden Ansprüche, wobei wenigstens ein Steuerparameter des Steueralgorithmus durch einen Bediener voreinstellbar ist.

5. Thermoanalysevorrichtung nach einem der vorangehenden Ansprüche, wobei der Steuervorgang einen Betriebsbeginn der Gasanalyseeinrichtung (26) umfasst.

6. Thermoanalysevorrichtung nach einem der vorangehenden Ansprüche, wobei infolge der Auslösung des Steuervorganges eine bestimmte Menge der freigesetzten Gase zur Gasanalyseeinrichtung (26) transferiert wird.

7. Thermoanalysevorrichtung nach einem der Ansprüche 1 bis 6, wobei der Steueralgorithmus ein vordefiniertes Temperaturprogramm mit einer bestimmten zeitabhängigen Veränderung der Temperatur (T) der Probe (16) und eine zeitweilige Unterbrechung des Temperaturprogrammes zu einem Zeitpunkt vorsieht, an welchem eine Erfüllung vorbestimmter Kriterien durch das erfasste Signal (TG) und/oder durch eine ermittelte Änderungsrate (DTG) dieses Signals (TG) detektiert wird.

8. Thermoanalysevorrichtung nach Anspruch 7, wobei während der Unterbrechung der Temperaturveränderung die Gasanalyseeinrichtung (26) betrieben wird und der Steueralgorithmus eine Fortsetzung der Temperaturveränderung nach einem Abschluss einer Gasuntersuchung mittels der Gasanalyseeinrichtung (26) vorsieht.

9. Thermoanalysevorrichtung nach einem der Ansprüche 1 bis 8, ferner umfassend eine Auswerteeinrichtung (A), welche nach Abschluss der kontrollierten Veränderung der Temperatur (T) der Probe (16) auf Basis der hierbei gemessenen Temperatur (T) der Probe (16) und einem Ergebnis der Gasuntersuchung ein Auswertungsergebnis liefert, welches die Temperatur eines thermischen Zersetzungs- oder Verdampfungsvorganges angibt und bevorzugt ferner eine Zuordnung dieser Temperatur zu einem betreffenden Ergebnis der Gasuntersuchung beinhaltet.

10. Verfahren zur Thermoanalyse, umfassend
- gesteuertes Temperieren einer zu untersuchenden Probe (16) zur kontrollierten Veränderung der Temperatur (T) der Probe (16),
- kontinuierliches Erfassen wenigstens eines für eine Eigenschaft der Probe (16) charakteristischen Signals (TG) während der Veränderung der Temperatur (T) der Probe (16), und
- Untersuchen von Gasen, die von der Probe (16) freigesetzt werden,
**dadurch gekennzeichnet, dass** die Untersuchung der Gase in durch Verwendung eines einer Gasanalyseeinrichtung (26) vorgeschalteten Ventil/Injektionssystems (28, 30) gesteuerter Weise und gemäß eines Steueralgorithmus unter Berücksichtigung des erfassten Signals (TG) durchgeführt wird, derart, dass anhand einer Erfüllung vorbestimmter Kriterien durch das erfasste Signal (TG) und/oder durch eine ermittelte Änderungsrate (DTG) dieses Signals (TG) ein Steuervorgang für die Gasanalyseeinrichtung (26) ausgelöst wird, der eine aktive Ansteuerung eines Transfers von Gasen von der Probe (16) zur Gasanalyseeinrichtung (26) durch eine entsprechende Ansteuerung des Ventil/Injektionssystems (28, 30) umfasst.

## Claims

1. A thermal analysis device, comprising
- a controllable temperature control device (ST, 20) for the controlled change of the temperature (T) of a sample (16) to be investigated,
- a recording device (ST) for the continuous recording of at least one signal (TG) characteristic for a property of the sample (16) during the change of the temperature (T), and
- a gas analysis device (26) for investigating gases, which are released by the sample (16),
**characterized in that** the gas analysis device (26) is designed to be controllable (28, 30) by a valve/injection system (28, 30) connected upstream of a gas analysis device (26) and is set up to be controlled according to a control algorithm in such a manner, taking account of the recorded signal (TG), that on the basis of a fulfilment of predetermined criteria by the recorded signal (TG) and/or by a recorded rate of change (DTG) of this signal (TG), a control process for the gas analysis device (26) is triggered, which comprises an active control of a transfer of gases from the sample (16) to the gas analysis device (26) by corresponding control of the valve/injection system (28, 30).

2. The thermal analysis device according to Claim 1, wherein a sample chamber (14) containing the sample (16) to be investigated is connected to the gas analysis device (26) via a heatable transfer line (32) and a heatable valve/injection system (28, 30).

3. The thermal analysis device according to any of the preceding claims, wherein the control algorithm provides a preprocessing of the signal (TG) recorded by the recording device (ST) for continuously determining a rate of change (DTG) of this signal (TG).

4. The thermal analysis device according to any of the preceding claims, wherein at least one control parameter of the control algorithm can be preset by a user.

5. The thermal analysis device according to any of the preceding claims, wherein the control process comprises a start of operation of the gas analysis device (26).

6. The thermal analysis device according to any of the preceding claims, wherein as a consequence of the triggering of the control process, a certain quantity of the released gases is transferred to the gas analysis device (26).

7. The thermal analysis device according to any of Claims 1 to 6, wherein the control algorithm provides a predefined temperature program with a certain time-dependent change of the temperature (T) of the sample (16) and a temporary interruption of the temperature program at a time, at which fulfilment of predetermined criteria by the recorded signal (TG) and/or by a recorded rate of change (DTG) of this signal (TG) is detected.

8. The thermal analysis device according to Claim 7, wherein during the interruption of the temperature change, the gas analysis device (26) is operated and the control algorithm provides a continuation of the temperature change after termination of a gas investigation by means of the gas analysis device (26).

9. The thermal analysis device according to any of Claims 1 to 8, further comprising an evaluation device (A), which after the termination of the controlled change of the temperature (T) of the sample (16), delivers an evaluation result on the basis of the temperature (T) of the sample (16) measured here and a result of the gas investigation, which evaluation result specifies the temperature of a thermal decomposition or evaporation process and preferably further contains an assignment of this temperature to a relevant result of the gas investigation.

10. A method for thermal analysis, comprising
- controlled temperature control of a sample (16) to be investigated for the controlled change of the temperature (T) of the sample (16),
- continuous recording of at least one signal (TG) characteristic for a property of the sample (16) during the change of the temperature (T) of the sample (16), and
- investigating gases, which are released by the sample (16),
**characterized in that** the investigation of the gases is carried out in a manner controlled by using a valve/injection system (28, 30) connected upstream of a gas analysis device (26) and according to a control algorithm in such a manner, taking account of the recorded signal (TG), that on the basis of a fulfilment of predetermined criteria by the recorded signal (TG) and/or by a recorded rate of change (DTG) of this signal (TG), a control process for the gas analysis device (26) is triggered, which comprises an active control of a transfer of gases from the sample (16) to the gas analysis device (26) by corresponding control of the valve/injection system (28, 30).

## Revendications

1. Dispositif d'analyse thermique, comprenant
- un dispositif de températion pouvant être commandé (ST, 20) pour la modification contrôlée de la température (T) d'un échantillon à analyser (16),
- un dispositif de détection (ST) pour la détection continue d'au moins un signal (TG) caractéristique d'une propriété de l'échantillon (16) pendant la modification de la température (T), et
- un dispositif d'analyse de gaz (26) pour analyser des gaz qui sont émis par l'échantillon (16),
**caractérisé en ce que** le dispositif d'analyse de gaz (26) est réalisé de manière à pouvoir être commandé (28, 30) par un système de soupape/d'injection installé en amont de celui-ci (28, 30) et est conçu pour être commandé suivant un algorithme de commande de manière à ce que, sur la base d'une conformité du signal détecté (TG) et/ou d'une vitesse déterminée de modification (DTG) avec des critères prédéfinis de ce signal (TG), soit déclenché pour le dispositif d'analyse de gaz (26) un processus de commande qui comprenne une commande active d'un transfert de gaz de l'échantillon (16) vers le dispositif d'analyse de gaz (26) par une commande correspondante du système de soupape/d'injection (28, 30).

2. Dispositif d'analyse thermique selon la revendication 1, dans lequel une cellule d'échantillon (14) contenant l'échantillon à analyser (16) est raccordée par une conduite de transfert pouvant être chauffée (32) et un système de soupape/d'injection pouvant être chauffé (28, 30) au dispositif d'analyse de gaz (26).

3. Dispositif d'analyse thermique selon une des revendications précédentes, dans lequel l'algorithme de commande prévoit un prétraitement du signal (TG) détecté par le dispositif de détection (ST) pour la détermination continue d'une vitesse de modification (DTG) de ce signal (TG).

4. Dispositif d'analyse thermique selon une des revendications précédentes, dans lequel au moins un paramètre de commande de l'algorithme de commande est pré-réglable par un utilisateur.

5. Dispositif d'analyse thermique selon une des revendications précédentes, dans lequel le processus de commande comprend un début de fonctionnement du dispositif d'analyse de gaz (26).

6. Dispositif d'analyse thermique selon une des revendications précédentes, dans lequel, suite au déclenchement du processus de commande, une certaine quantité des gaz émis est transférée au dispositif d'analyse de gaz (26).

7. Dispositif d'analyse thermique selon une des revendications 1 à 6, dans lequel l'algorithme de commande prévoit un programme prédéfini de température avec une certaine modification à dépendance chronologique de la température (T) de l'échantillon (16) et une interruption temporaire du programme de température à un moment où une conformité du signal détecté (TG) et/ou d'une vitesse de modification déterminée (DTG) avec des critères prédéfinis de ce signal (TG) est détectée.

8. Dispositif d'analyse thermique selon la revendication 7, dans lequel, pendant l'interruption de la modification de température, le dispositif d'analyse de gaz (26) fonctionne et l'algorithme de commande prévoit une poursuite de la modification de température à la fin d'une analyse de gaz au moyen du dispositif d'analyse de gaz (26).

9. Dispositif d'analyse thermique selon une des revendications 1 à 8, comprenant en outre un dispositif d'exploitation (A), qui, à la fin de la modification contrôlée de la température (T) de l'échantillon (16), à partir de la température (T) alors mesurée de l'échantillon (16) et d'un résultat de l'analyse de gaz, donne un résultat d'exploitation qui indique la température d'un processus thermique de décomposition et d'évaporation et contient de préférence en outre une association de cette température à un résultat concerné de l'analyse de gaz.

10. Procédé d'analyse thermique, comprenant
- une températion commandée d'un échantillon à analyser (16) pour la modification contrôlée de la température (T) de l'échantillon (16),
- une détection continue d'un signal (TG) caractéristique d'une propriété de l'échantillon (16) pendant la modification de la température (T) de l'échantillon (16), et
- l'analyse de gaz qui sont émis par l'échantillon (16),
**caractérisé en ce que** l'analyse des gaz est effectuée de manière commandée en utilisant un système de soupape/d'injection (28, 30) installé en amont d'un dispositif d'analyse de gaz (26) et suivant un algorithme de commande en tenant compte du signal détecté (TG) de manière à ce que, partant de la conformité du signal détecté (TG) et/ou d'une vitesse déterminée de modification (DTG) avec des critères prédéfinis de ce signal (TG), soit déclenché pour le dispositif d'analyse de gaz (26) un processus de commande (26) qui comprenne une commande active d'un transfert de gaz de l'échantillon (16) vers le dispositif d'analyse de gaz (26) par une commande correspondante du système de soupape/d'injection (28, 30).
